# EUROPÄISCHE PATENTSCHRIFT

(11) **EP 0 504 650 B1**
(45) Veröffentlichungstag und Bekanntmachung des Hinweises auf die Patenterteilung: **10.08.1994**
(21) Anmeldenummer: 92103601.8
(22) Anmeldetag: 02.03.1992
(51) Int. Cl.: B65D 43/06

(54) **Verfahren und Dichtungsmaterial zur Herstellung der Deckeldichtung von Kunststoffdeckeln für blasgeformte Kunststoffässer**
Method of and sealing material for manufacturing a lid seal for plastic lids of blow-moulded plastic drums
Procédé et matériau d'étanchéité pour la fabrication du joint d'étanchéité pour couvercles en plastique de fûts en plastique soufflés

(30) Priorität: 16.03.1991 DE 4108606
(43) Veröffentlichungstag der Anmeldung: 23.09.1992
(73) Patentinhaber: Schütz-Werke GmbH & Co. KG., D-56242 Selters (DE)
(72) Erfinder: Wildfeuer, Eberhard, Dr., W-5430 Montabaur-Reckenthal (DE); Erll, Thomas, W-5418 Helferskirchen (DE)
(74) Vertreter: Pürckhauer, Rolf, Dipl.-Ing.

(56) Entgegenhaltungen:
- EP-A- 0 380 269
- DE-U- 9 011 590

## Beschreibung

Die Erfindung betrifft ein Verfahren zur Herstellung der Deckeldichtung von Kunststoffdeckeln für blasgeformte Kunststoffässer nach dem DE 90 11 590 U 1, mit einem den Faßhals umschließenden Außenrand und einem in den Faßhals eintauchenden, über den Deckelboden unterhalb der Faßöffnung vorstehenden Innenrand sowie einem an den Grund des Ringraumes zwischen Deckelaußen- und Deckelinnenrand angeformten Ringsteg, der mit einem Dichtungsmaterial umspritzt ist, das aus geschäumtem Kunststoff besteht.

Beim industriellen Einsatz des gattungsgemäßen Deckelfasses hat sich gezeigt, daß vornehmlich bei niedrigen Außentemperaturen unter 0°C, bei denen in dem verschlossenen Faß ein Vakuum auftreten kann, die Deckeldichtung mit dem Öffnungsrand des Fasses verklebt, so daß der Faßdeckel nur unter Schwierigkeiten geöffnet werden kann.

Der Erfindung liegt die Aufgabe zugrunde, ein Verfahren und ein Dichtungsmaterial zur Herstellung der Deckeldichtung für den gattungsgemäßen Faßdeckel aus Kunststoff zu entwickeln, die die Fertigung von Deckeldichtungen erlauben, die dauerhafte, gute Dichteigenschaften aufweisen und unabhängig von der herrschenden Umgebungstemperatur und dem Füllgut des Fasses ein leichtes Öffnen der Faßdeckel ermöglichen.

Diese Aufgabe ist erfindungsgemäß gelöst durch die Merkmale der Patentansprüche 1 und 2.

Das Herstellungsverfahren und das Dichtungsmaterial nach der Erfindung ermöglichen die Herstellung von leicht zu handhabenden, betriebssicheren Faßdeckeln mit einem Spannringverschluß für Weithalsfässer aus Kunststoff.

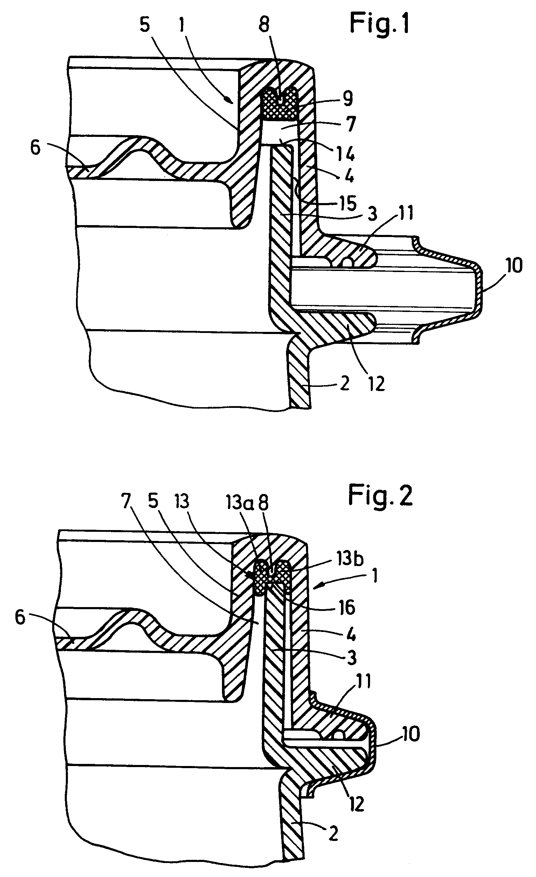

Das erfindungsgemäße Herstellungsverfahren ist nachstehend anhand eines in der Zeichnung ausschnittsweise dargestellten Faßdeckels für ein Weithalsfaß näher erläutert, wobei die Figuren 1 und 2 den Faßhalsbereich eines Weithalsfasses mit Spannringverschluß zeigen, und zwar in Fig. 1 mit abgehobenem und in Fig. 2 mit geschlossenem Deckel.

Der z.B. aus Polyethylen gespritzte Deckel 1 nach den Fign. 1 und 2 für ein aus Kunststoff geblasenes Weithalsfaß 2 weist einen den Faßhals 3 umschließenden Außenrand 4 und einen in den Faßhals 3 eintauchenden Innenrand 5 auf, der über den Deckelboden 6 unterhalb der Faßöffnung vorsteht. Deckelaußenrand 4 und Deckelinnenrand 5 bilden einen Ringraum 7, von dessen Grund ein Ringsteg 8 axial vorsteht. Gemäß Fig. 1 ist der Ringsteg 8 mit einem aus geschäumtem Kunststoff bestehenden Dichtungsmaterial 9, z.B. Polyurethan umspritzt.

Beim Schließen des Deckels 1 mittels eines Spannringes 10, der einen unten am Deckelaußenrand 4 angeformten, umlaufenden Flansch 11 übergreift und eine mit Abstand unterhalb der Faßöffnung von der Faßwand radial nach außen vorstehende, massive Bordur 12 untergreift, wird der Ringsteg 8 unter Aufteilung des Dichtungsmaterials 9 in zwei die Deckeldichtung 13 bildende Dichtringe 13a, 13b auf den Öffnungsrand 14 des Faßhalses 3 aufgepreßt, wobei die Dichtringe 13a, 13b über den Öffnungsrand 14 vorgespannt werden (Fig. 2). Bei geschlossenem Spannring 10 ergibt sich zwischen Deckelflansch 11 und Faßboden 12 ein Abstand, so daß auf den Deckel 1 einwirkende Axialkräfte sicher und unmittelbar in den Faßhals 3 und von dort in den Faßkörper eingeleitet werden.

Zur Herstellung der Deckeldichtung 13 wird der Ringraum 7 auf der Innenseite des Deckels 1 zur Aktivierung der Ringraumoberfläche 15 mit einer offenen Flamme beflammt. Anschließend wird das Dichtungsmaterial 9, vorzugsweise Polyurethan, mit einer Schäummaschine in den Grund des Ringraumes 7 eingespritzt, und danach wird der Deckel 1 zur Entgasung der Dichtung 13 gerüttelt. Durch die Aktivierung der Ringraumoberfläche 15 wird eine dauerhafte Klebeverbindung zwischen dieser und der Deckeldichtung 13 erreicht.

Das vorzugsweise aus geschäumtem Polyurethan bestehende Dichtungsmaterial 9 enthält ein Trennmittel mit Langzeitwirkung, das durch das Dichtungsmaterial zu der auf dem Öffnungsrand 14 des Faßhalses 3 aufliegenden Dichtfläche 16 der Deckeldichtung 13 diffundiert und ein Verkleben der Deckeldichtung 13 mit dem Öffnungsrand 14 des Weithalsfasses 2 verhindert, so daß der Deckel 1 unabhängig von der Umgebungstemperatur und einem ggf. im Faß herrschenden Unterdruck ohne Schwierigkeiten geöffnet werden kann.

## Patentansprüche

1. Verfahren zur Herstellung der Deckeldichtung von Kunststoffdeckeln für blasgeformte Kunststoffässer, mit einem den Faßhals umschließenden Außenrand und einem in den Faßhals eintauchenden, über den Deckelboden unterhalb der Faßöffnung vorstehenden Innenrand sowie einem an den Grund des Ringraumes zwischen Deckelaußen- und Deckelinnenrand angeformten Ringsteg, der mit einem Dichtungsmaterial umspritzt ist, das aus geschäumtem Kunststoff besteht, dadurch gekennzeichnet, daß der die Dichtung (13) aufnehmende Ringraum (7) auf der Innenseite des aus Kunststoff, z.B. Polyethylen, gespritzten Deckels (1) zur Aktivierung der Ringraumoberfläche (15) mit einer offenen Flamme beflammt wird, anschließend das Kunststoff-Dichtungsmaterial (9) mit einer Schäummaschine in den Ringraum (7) eingespritzt und danach der Deckel (1) zur Entgasung der Dichtung (13) gerüttelt wird.

2. Kunststoffmaterial zur Herstellung der Deckeldichtung gemäß dem Verfahren nach Anspruch 1, dadurch gekennzeichnet, daß der geschäumte Kunststoff vorzugsweise aus geschäumtem Polyurethan besteht und ein Trennmittel mit Langzeitwirkung enthält, das durch das Dichtungsmaterial (9) zu der auf dem Öffnungsrand (14) eines Fasses (2) aufliegenden Dichtfläche (16) der Deckeldichtung (13) diffundiert.

## Claims

1. Method for manufacturing the lid seal of plastic lids for blow-moulded plastic drums according to DE-U-9 011 590, with an outer edge surrounding the drum neck and an inner edge inserted in the drum neck and projecting beyond the bottom of the lid below the drum opening, as well as with an annular web which is moulded onto the bottom of the annular chamber between the inner and outer edges of the lid and around which is injection moulded a sealing material consisting of foamed plastic, characterised in that the annular chamber (7) which receives the seal (13) on the inside of the lid (1) which is injection moulded from plastic, e.g. polyethylene, is flamed with an open flame to activate the surface (15) of the annular chamber, then the plastic sealing material (9) is injected into the annular chamber (7) with a foaming machine and then the lid (1) is vibrated to release gas from the seal (13).

2. Plastic material for manufacturing the lid seal by the method according to claim 1, characterised in that the foamed plastic preferably consists of foamed polyurethane and contains a release agent with sustained action which diffuses through the sealing material (9) to the sealing surface (16) of the lid seal (13) resting on the opening edge (14) of a drum (2).

## Revendications

1. Procédé de fabrication du joint d'étanchéité de couvercles en matière plastique pour des fûts en matière plastique soufflés, comprenant un bord extérieur entourant le col du fût et un bord intérieur pénétrant dans le col du fût et dépassant du fond du couvercle en-dessous de l'ouverture du fût, ainsi qu'une nervure annulaire, issue du fond de la chambre annulaire comprise entre le bord extérieur et le bord intérieur du couvercle et revêtue par injection d'un matériau d'étanchéité en matière mousse,
caractérisé en ce que :
- la chambre (7) annulaire recevant le joint (13) d'étanchéité est soumise à l'action d'un feu nu du côté intérieur du couvercle (1) injecté en matière plastique, par exemple en polyéthylène, pour activer la surface (15) de la chambre annulaire,
- et ensuite le matériau (9) d'étanchéité en matière plastique est injecté par une machine à mousser dans la chambre (7) annulaire,
- puis le couvercle (1) est secoué pour dégazer le joint (13) d'étanchéité.

2. Matériau en matière plastique pour la fabrication du joint d'étanchéité de couvercle suivant le procédé de la revendication 1, caractérisé en ce que la matière plastique mousse est, de préférence du polyuréthanne moussen, qui contient un agent de démoulage à effet de longue durée, qui diffuse à travers le matériau (9) d'étanchéit vers la surface (16) d'étanchéité du joint (13) d'étanchéité du couvercle, appliquée au bord (14) de l'ouverture du fût (2).
